Europäisches Patentamt

European Patent Office

Office européen des brevets

(19)

(11) **EP 0 938 063 B1**

(12) **EUROPÄISCHE PATENTSCHRIFT**

(45) Veröffentlichungstag und Bekanntmachung des Hinweises auf die Patenterteilung:
**16.02.2005 Patentblatt 2005/07**

(51) Int Cl.⁷: **G06T 5/20**

(21) Anmeldenummer: **99200378.0**

(22) Anmeldetag: **09.02.1999**

(54) **Verfahren zur zweidimensionalen Abbildung von Strukturen für die medizinische Diagnostik**

Method of two-dimensional imaging of structures for medical diagnosis

Procédé d'imagerie bidimensionelle de structures pour le diagnostic médical

(84) Benannte Vertragsstaaten:
**DE FR GB NL**

(30) Priorität: **18.02.1998 DE 19806728**

(43) Veröffentlichungstag der Anmeldung:
**25.08.1999 Patentblatt 1999/34**

(73) Patentinhaber:
• **Philips Intellectual Property & Standards GmbH**
**20099 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB NL**

(72) Erfinder:
• **Lorenz, Christian Dr., Philips Patentverw. GmbH**
**22335 Hamburg (DE)**
• **Weese, Jürgen Dr., Philips Patentverw. GmbH**
**22335 Hamburg (DE)**

(74) Vertreter: **Volmer, Georg, Dipl.-Ing. et al**
**Philips Intellectual Property & Standards GmbH,**
**Postfach 50 04 42**
**52088 Aachen (DE)**

(56) Entgegenhaltungen:
**EP-A- 0 316 135**          **US-A- 5 226 113**

**Beschreibung**

Die Erfindung betrifft ein Verfahren für die medizinische Diagnostik zur zweidimensionalen Abbildung von in einem Objekt enthaltenen Strukturen, mit den Schritten:

a) Akquisition eines ersten Datensatzes des Objektes zum Definieren von Voxel-Bildwerten für die Voxel innerhalb eines dreidimensionalen Untersuchungsbereiches,
b) Erzeugung eines zweiten Datensatzes aus dem ersten Datensatz durch eine die Strukturen hervorhebende Filterung.

Dabei wird als Voxel ein Volumenelement in dem dreidimensionalen Untersuchungsbereich bezeichnet und als Pixel ein Bildelement des zweidimensionalen Bildes. Als Voxel-Bildwert wird der einem Voxel zugeordnete Zahlenwert bezeichnet, der eine physikalische Größe in diesem Voxel kennzeichnet, z.B die Absorption von Röntgenstrahlung oder die Kernmagnetisierung.

Außerdem bezieht sich die Erfindung auf ein System zur Durchführung des Verfahrens sowie auf ein entsprechendes Bildverarbeitungsverfahren.

Aus der Veröffentlichung CAR '96, Paris, pp 260-265, (1996) ist ein derartiges Verfahren bekannt. Nachteilig daran ist, daß die zweidimensionalen Bilder als Folge der Filterung dem Betrachter einen gänzlich ungewohnten Bildeindruck vermitteln.

Weiterhin ist es aus der Zeitschrift "Systems and Computers in Japan", Vol. 25, No. 2, 1994, pp. 67-80, bekannt, für Zwecke der medizinischen Diagnostik aus einem dreidimensionalen Datensatz ein zweidimensionales Bild durch eine sogenannte MIP (Maximum Intensity Projection) abzuleiten. Bei einer MIP wird von den Bildwerten der Voxel, die in dem zweidimensionalen Bild auf dasselbe Pixel projiziert werden, der größte herangezogen. Eine gute Darstellung ist mit diesem Verfahren nicht möglich, wenn der Untersuchungsbereich außer den abzubildenden Strukturen weitere Strukturen enthält, deren Bildwerte in dem gleichen Bereich liegen wie die Bildwerte der abzubildenden Strukturen. Um dieses Problem zu lösen, werden bei dem bekannten Verfahren die Bereiche, die die gesuchten Strukturen enthalten, mittels einer automatisch erstellten Bildmaske segmentiert. Eine solche automatische Segmentierung, bei der anhand der Bildwerte darüber entschieden wird, ob ein Voxel einen Teil der Struktur beinhaltet oder nicht, ist aber nur ungenau möglich; eine manuelle Segmentierung wäre demgegenüber sehr aufwendig.

Aufgabe der vorliegenden Erfindung ist es, ein Verfahren der eingangs genannten Art so auszugestalten, daß die abzubildenden Strukturen nicht verändert werden, daß aber unerwünschte Strukturen in dem zweidimensionalen Bild unterdrückt werden.

Diese Aufgabe wird durch die folgenden Schritte gelöst:

c) Bestimmen von Voxeln, die in einem zweidimensionalen Bild auf dasselbe Pixel projiziert werden,
d) Auswahl mindestens eines dieser Voxel in Abhängigkeit von seinem Voxel-Bildwert in dem zweiten Datensatz,
e) Erzeugung des zweidimensionalen Bildes, wobei der Bildwert für das Pixel aus dem Voxel-Bildwert des ausgewählten Voxels in dem ersten Datensatz abgeleitet wird.

Durch geeignete Wahl des Filterverfahrens kann den Voxeln, die die abzubildenden Strukturen darstellen, ein anderer (z.B. größerer) Voxel-Bildwert zugeordnet werden als den Voxeln, die unerwünschte Strukturen enthalten, die sich den abzubildenden Strukturen in dem Bild störend überlagern könnten. Bei der Erfindung wird diese Filterung jedoch nur zur Identifizierung von Voxeln benutzt, die mit einiger Wahrscheinlichkeit zu der abzubildenden Struktur gehören. Für die Abbildung dieser Struktur werden die Original-Bildwerte (aus dem ersten Datensatz) herangezogen, die diesen Voxeln zugeordnet sind. Infolgedessen lassen sich die abzubildenden und die unerwünschten Strukturen voneinander trennen, wobei die abzubildenden Strukturen mit den Original-Bildwerten (bzw.- Grauwerten) wiedergegeben werden, so daß das zweidimensionale Bild hinsichtlich dieser Strukturen dem Benutzer den gewohnten Bildeindruck vermittelt.

Bei der Auswahl der abzubildenden Voxel gemäß Merkmal d) gibt es verschiedene Möglichkeiten. Die Auswahl nach Anspruch 2 entspricht einer MIP, während die Auswahl nach Anspruch 3 einer CVP (Closest Vessel Projection) entspricht. Bei der CVP werden jeweils die am dichtesten beim Betrachter befindlichen Voxel der Struktur (z.B. eines Gefäßsystems) abgebildet.

Die Ausgestaltung nach Anspruch 4 führt dazu, daß der nicht von den Strukturen bedeckte Hintergrund unterdrückt wird und in dem Bild z.B. schwarz abgebildet wird. Eine anatomische Orientierungsmöglichkeit kann sich dabei gemäß Anspruch 5 ergeben.

Der erste Datensatz kann auf unterschiedliche Weise akquiriert werden, z.B. mittels MR (MR = Magnetresonanz) gemäß Anspruch 6 oder durch eine Röntgen-CT gemäß Anspruch 7.

Ein Bildverarbeitungsverfahren, das aus dem ersten Satz das gewünschte zweidimensionale Bild ableitet, ist in Anspruch 8 angegeben, und Anspruch 9 beschreibt eine Anordnung zur Durchführung des erfindungsgemäßen Verfahrens.

Die Erfindung wird nachstehend anhand der Zeichnungen näher erläutert. Es zeigen:

Fig. 1 eine schematische Darstellung eines Gerätes, bei dem die Erfindung anwendbar ist,

Fig. 2 eine schematische Erläuterung der verschiedenen Schritte dieses Verfahrens,

Fig. 3a den räumlichen Verlauf der Bildwerte der auf dasselbe Pixel projizierten Voxel für zwei verschiedene Pixel im zweiten Datensatz und

Fig. 3b den entsprechenden Verlauf im ersten Datensatz.

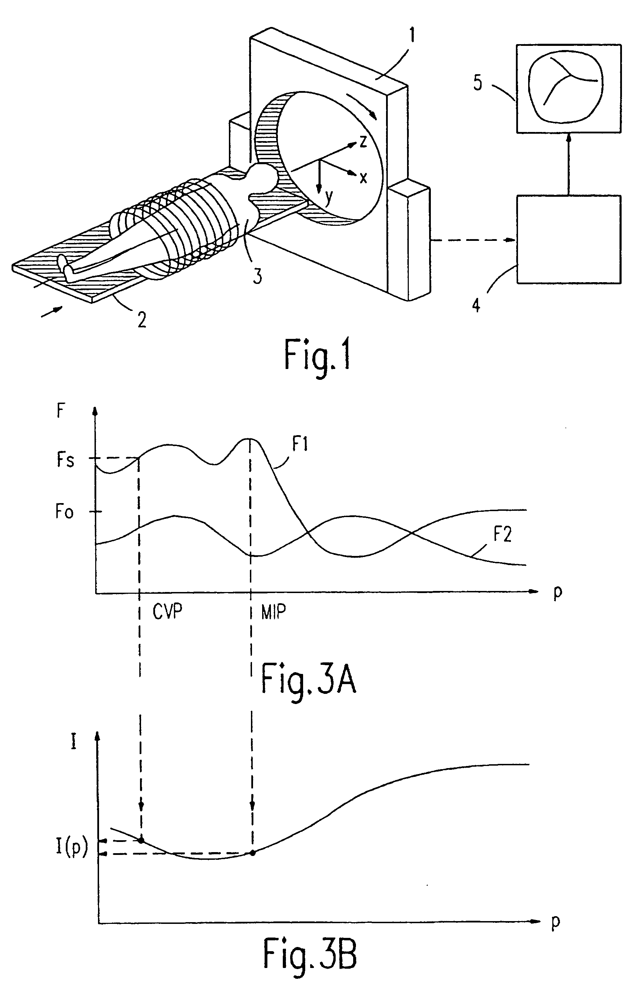

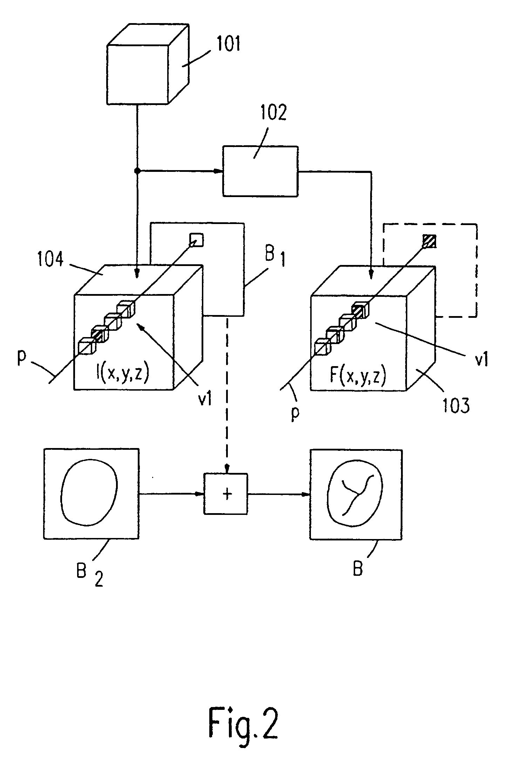

Fig. 1 stellt einen Röntgen-Computertomographen 1 dar, mit dem ein auf einer verfahrbaren Tischplatte 2 befindlicher Patient 3 untersucht werden kann. Ein dreidimensionaler Bereich des Patienten kann dabei entweder als Folge paralleler benachbarter Schichtaufnahmen untersucht werden oder mittels eines "helical scan", wobei die Tischplatte kontinuierlich in ihrer Längsrichtung (z) verschoben wird. Dabei wird ein erster Datensatz I(x,y,z) akquiriert, der die Absorption der Röntgenstrahlung in den Voxeln des Untersuchungsbereichs darstellt. Dieser Datensatz wird in einem Bildverarbeitungsrechner 4 gespeichert und verarbeitet, und das dabei erzeugte zweidimensionale Bild wird auf einem Monitor 5 dargestellt.

Die Erfindung ist auch bei einem anderen Untersuchungssystem anwendbar, das es gestattet, einen Datensatz zu akquirieren, der einen bestimmten physikalischen Parameter in einem dreidimensionalen Untersuchungsbereich charakterisiert, z.B. ein Ultraschallgerät oder ein MR-Gerät.

Die im Bildverarbeitungsrechner 4 erfolgende Bildverarbeitung wird im folgenden anhand der Fig. 2 näher erläutert. Den ersten Schritt 101 bildet die geschilderte Akquisition des ersten Datensatzes I(x,y,z), der - im Falle eines Röntgen-Computertomographen - die Absorption der Röntgenstrahlung als Funktion des Ortes x,y,z definiert.

Der nächste Schritt 102 besteht darin, die abzubildenden Strukturen durch eine Filterung hervorzuheben und auf diese Weise aus dem ersten Satz I(x,y,z) einen zweiten Datensatz F(x,y,z) zu erzeugen. Die Filterung muß dabei auf die darzustellenden Strukturen ausgerichtet sein. Wenn beispielsweise ein (gegebenenfalls mit Kontrastmittel gefülltes) Gefäßsystem im Körper des Patienten oder in seinen Schädel implantierte Elektroden abgebildet werden sollen, muß dieses Filterverfahren so beschaffen sein, daß es linienförmige Strukturen hervorheben kann. Solche Filterverfahren sind bekannt, z.B. aus CVRMed and MRCAS, Lecture Notes in Computer Science **1205** (Springer Verlag, Berlin,1997) pp 233-242.

Der Voxel-Bildwert F(x,y,z), der einem Voxel x, y,z durch das Filterverfahren zugeordnet wird, ist ein Maß für die Wahrscheinlichkeit, daß das zugehörige Voxel zu der interessierenden Struktur gehört. Im folgenden soll angenommen werden, daß ein großer Voxel-Bildwert einer hohen Wahrscheinlichkeit für die Zugehörigkeit zu der interessierenden Struktur entspricht.

Im nächsten Schritt 103 werden die Parameter einer Projektion definiert, mit der der durch den ersten bzw. zweiten Datensatz definierte dreidimensionale Untersuchungsbereich in ein zweidimensionales Bild überführt werden soll. Im einfachsten Fall kann es sich dabei um eine Parallel-Projektion handeln, vorzugsweise mit einer zu einer der Koordinatenrichtungen x, y und z parallel verlaufenden Projektionsrichtung. Jedoch ist ebenso eine Zentral-Projektion möglich oder aber auch eine Projektion, bei der die Projektionsstrahlen gekrümmt sind.

Außerdem werden im Schritt 103 die Voxel bestimmt, die - bei der gewählten Projektionsgeometrie - auf dasselbe Pixel in dem zweidimensionalen Bild (gestrichelt angedeutet) projiziert werden. Zur Veranschaulichung ist in dem Block 103 ein Projektionsstrahl p mit einigen der darauf befindlichen Voxeln angedeutet, der in einem ebenfalls auf dem Projektionsstrahl befindlichen Pixel des zweidimensionalen Bildes endet. Es erfolgt nun eine Auswahl mindestens eines dieser Voxel - z.B. v1 - in Abhängigkeit von seinem Voxel-Bildwert F (x,y,z) in dem zweiten Datensatz.

Die Auswahl ist in Fig. 3a erläutert, worin der Verlauf der Voxel-Bildwerte F(p) aus dem zweiten Datensatz F(x,y,z) für die jeweils auf dem gleichen Projektionsstrahl p befindlichen und auf dasselbe Pixel projizierten Voxel in zwei verschiedenen Kurven F1, F2 (für zwei verschiedene Projektionsstrahlen) dargestellt ist. Eine der Möglichkeiten für die Auswahl besteht darin, das Voxel mit dem größten Voxel-Bildwert, d.h. mit der größten Wahrscheinlichkeit, daß dieses Voxel zu der interessierenden Struktur gehört, auszuwählen, was - bezogen auf den zweiten Datensatz F(x,y,z) - einer MIP entspricht. Eine andere Möglichkeit besteht darin, das Voxel auszuwählen, das als erstes auf dem Projektionsstrahl p einen Voxel-Bildwert F(p) oberhalb eines Schwellwertes Fs aufweist; dies entspricht in bezug auf den zweiten Datensatz einer CVP. Es sind aber auch andere Möglichkeiten der Auswahl denkbar.

Im Schritt 104 wird mit Hilfe der ausgewählten Voxel ein zweidimensionales Bild $B_1$ erzeugt. Dabei wird der Bildwert für die Pixel des Bildes $B_1$ aus den zuvor ausgewählten Voxeln abgeleitet. Dabei wird jedoch nicht der Voxel-Bildwert F(p) herangezogen, der diesem Voxel im zweiten Datensatz F zugeordnet ist und aufgrund dessen es ausgewählt wurde, sondern der Voxel-Bildwert I(p), der im ersten Datensatz für dieses Voxel gespeichert ist, so daß es in dem Bild $B_1$ originalgetreu wiedergegeben wird. Dieser Voxel-Bildwert kann durchaus kleiner sein als die Bildwerte der anderen Voxel, die auf dem gleichen Projektionsstrahl liegen.

Dies zeigt auch Fig. 3b, die den räumlichen Verlauf der Voxel-Bildwerte I(p) entlang des Projektionsstrahls p darstellt, dem in Fig 3a die Kurve F1 zugeordnet ist. Es wird der Voxel-Bildwert I(p) herangezogen, der an derselben Position entlang des Projektionsstrahls p liegt wie das Maximum im zweiten Datensatz - bzw. wie der erste oberhalb des Schwellwertes Fs (Fig.

3a) liegende Wert.

Das erfindungsgemäße Verfahren führt dazu, daß störende Strukturen im Untersuchungsbereich, die bei einer Projektion normalerweise den interessierenden Strukturen überlagert werden, ausgeblendet werden, weil ihnen im zweiten Datensatz F niedrige Bildwerte zugeordnet sind. Trotz der dafür erforderlichen Filterung des Original-Datensatzes erscheinen die abzubildenden Strukturen in dem Bild $B_1$ mit ihren originalen Kontrastverhältnissen, weil nicht der gefilterte Datensatz F für die ausgewählten Voxel herangezogen wird, sondern der originale (ungefilterte bzw. erste) Datensatz I.

Wenn das erfindungsgemäße Verfahren auch für die Pixel des Bildes $B_1$ angewandt würde, auf die kein Voxel aus den interessierenden Strukturen projiziert wird (Bildhintergrund), würde der Bildwert von einem Voxel abgeleitet, das entlang des Projektionsstrahls p z.B. den größten Wert $F(x,y,z)$ aufweist. Dies könnte dazu führen, daß sich in dem Bild außerhalb der Strukturen ein mehr oder weniger zufälliger Bildhintergrund ergeben würde, der die Bildinterpretation erschweren könnte. Um die dadurch möglichen Bildartefakte zu vermeiden, kann die Auswahl des für das zweidimensionale Bild $B_1$ herangezogenen Voxels (Block 103) folgendermaßen modifiziert werden:

a) Wenn die durch die Filterung erzeugten Bildwerte $F(x,y,z)$ sämtlicher Voxel entlang des Primärstrahls wenigstens für ein Voxel oberhalb eines Grenzwertes Fo liegen, wie das beispielsweise bei der Kurve F1 in Fig. 3a der Fall ist, dann wird eines der Voxel bestimmt und sein Bildwert im ersten Datensatz für das dem Projektionsstrahl p zugeordnete Pixel im Bild $B_1$ herangezogen - wie zuvor erläutert.

b) Wenn jedoch alle Voxel entlang eines Projektionsstrahls p Voxel-Bildwerte $F(p)$ unterhalb des Grenzwertes Fo aufweisen, wie bei der Kurve F2 in Fig. 3a, dann wird dem zugehörigen Pixel ein konstanter, von F2 unabhängiger Bildwert zugeordnet. In diesem Fall besteht nämlich nur eine geringe Wahrscheinlichkeit, daß irgendein Voxel entlang des Projektionsstrahls zu der interessierenden Struktur gehört. Diese Hintergrundbildpunkte kann man in dem zweidimensionalen Bild $B_1$ daher einheitlich darstellen, z.B. weiß, grau oder schwarz.

Es entsteht dadurch zwar ein ruhiger, einheitlicher Bildhintergrund, jedoch kann unter Umständen die anatomische Orientierung für den Arzt erschwert sein. Um hier die Orientierung zu erleichtern, können das zweidimensionale Bild $B_1$ und ein für dieselbe Projektionsgeometrie errechnetes Standard-Projektionsbild $B_2$, in dem jedem Pixel z.B. der Mittelwert der Bildwerte für die Voxel auf dem diesem Pixel zugeordneten Projektionsstrahl p zugeordnet wird und das daher einen ähnlichen Charakter hat wie eine Röntgenaufnahme, addiert werden gemäß der Beziehung

$$B = B_1 + \alpha B_2,$$

wobei $\alpha$ ein geeignet zu wählender Gewichtungsfaktor ist und B das aus der Überlagerung beider Bilder entstehende Gesamtbild. In Fig. 2 ist dies durch gestrichelte Linien angedeutet.

Das erfindungsgemäße Verfahren ist geeignet, beispielsweise in einem Schädel implantierte Elektroden - frei von Überlagerungen durch die Schädelknochen - darzustellen. Es können aber auch mit einem Kontrastmittel gefüllte Herzkranzgefäße dargestellt werden, ohne daß sich dieser Darstellung die mit Kontrastmittel gefüllten Herzkammern überlagern. In beiden Fällen werden also linienförmige Strukturen dargestellt, doch sind auch andere Strukturen in dieser Weise darstellbar, wenn sie mittels eines geeigneten Filterverfahrens hervorgehoben werden können.

Im Ausführungsbeispiel wurden die Bildwerte für die Pixel des zweidimensionalen Bildes $B_1$ stets nur aus dem Voxel-Bildwert von je einem Voxel abgeleitet. Es ist jedoch auch möglich, mehrere Voxel auszuwählen und deren Voxel-Bildwerte heranzuziehen, z.B. die n Voxel mit dem größten Bildwert (wobei n eine ganze Zahl größer als 1 ist), oder die n entlang des Projektionsstrahls p aufeinander folgenden Voxel, deren Voxel-Bildwerte den größten Summenwert erreichen. Dadurch können Bildstörungen durch Rauschen oder dergl. verringert werden.

**Patentansprüche**

1. Verfahren für die medizinische Diagnostik zur zweidimensionalen Abbildung von in einem Objekt enthaltenen Strukturen,
   mit den Schritten:

   a) Akquisition eines ersten Datensatzes ($I(x,y,z)$) des Objektes zum Definieren von Voxel-Bildwerten für die Voxel innerhalb eines dreidimensionalen Untersuchungsbereiches,
   b) Erzeugung eines zweiten Datensatzes ($F(,x,y,z)$) aus dem ersten Datensatz durch eine die Strukturen hervorhebende Filterung,
   **gekennzeichnet durch** folgende Schritte:
   c) Bestimmen von Voxeln ($x,y,z$), die in einem zweidimensionalen Bild auf dasselbe Pixel ($u,v$) projiziert werden,
   d) Auswahl mindestens eines dieser Voxel ($x,y,z$) in Abhängigkeit von seinem Voxel-Bildwert ($F(x,y,z)$) in dem zweiten Datensatz,
   e) Erzeugung des zweidimensionalen Bildes ($B_1(u,v)$), wobei der Bildwert für das Pixel ($u,v$) aus dem Voxel-Bildwert ($I(x,y,z)$) des ausgewählten Voxels in dem ersten Datensatz abgeleitet wird.

**2.** Verfahren nach Anspruch 1,
**gekennzeichnet durch** die Auswahl des Voxels im Schritt d), dessen Voxel-Bildwert in dem zweiten Datensatz, einen Extremwert, insbesondere ein Maximum, hat.

**3.** Verfahren nach Anspruch 1,
**gekennzeichnet durch** die Auswahl des ersten Voxels im Schritt d), dessen Voxel-Bildwert in dem zweiten Datensatz einen vorgebbaren Schwellwert überschreitet bzw. unterschreitet.

**4.** Verfahren nach Anspruch 1,
**gekennzeichnet durch** die Zuordnung eines konstanten Bildwertes zu einem Pixel (u,v) in dem zweidimensionalen Bild ($B_1$(u,v)), wenn die Voxel-Bildwerte (F(x,y,z)) der auf dieses Pixel projizierten Voxel in dem zweiten Datensatz einen vorgebbaren Schwellenwert nicht überschreiten bzw. unterschreiten.

**5.** Verfahren nach Anspruch 1,
**gekennzeichnet durch** die Ableitung eines Projektionsbildes ($B_2$(u,v)) aus dem ersten Datensatz und **durch** additive Überlagerung dieses Projektionsbildes und des zweidimensionalen Bildes ($B_1$(u,v)).

**6.** Verfahren nach Anspruch 1,
**dadurch gekennzeichnet, daß** der erste Datensatz mittels eines MR-Verfahrens akquiriert wird.

**7.** Verfahren nach Anspruch 1,
**dadurch gekennzeichnet, daß** der erste Datensatz mittels eines Röntgen-CT-Verfahrens akquiriert wird.

**8.** Bildverarbeitungs-Verfahren für die medizinische Diagnostik zur zweidimensionalen Abbildung von Strukturen in einem Objekt, das durch einen ersten Datensatz (I(x,y,z)) mit Voxel-Bildwerten für die Voxel innerhalb eines dreidimensionalen Untersuchungsbereiches definiert ist, mit den Schritten

    a) Erzeugung eines zweiten Datensatzes (F(x,y,z)) aus dem ersten Datensatz durch eine die Strukturen hervorhebende Filterung,
    **gekennzeichnet durch** folgende Schritte:
    b) Bestimmen von Voxeln (x,y,z), die in einem zweidimensionalen Bild auf dasselbe Pixel (u,v) projiziert werden,
    c) Auswahl mindestens eines dieser Voxel (x,y,z) in Abhängigkeit von seinem Voxel-Bildwert (F(x,y,z)) in dem zweiten Datensatz,
    d) Erzeugung des zweidimensionalen Bildes ($B_1$(u,v)), wobei der Bildwert für das Pixel (u,v) aus dem Voxel-Bildwert (I(x,y,z)) des ausgewählten Voxels in dem ersten Datensatz abgeleitet wird.

**9.** Medizinisches Diagnose-System zur zweidimensionalen Abbildung von in einem Objekt enthaltenen Strukturen, mit Mitteln zur Akquisition eines ersten Datensatzes (I(x,y,z)) des Objektes zum Definieren von Voxel-Bildwerten für die Voxel innerhalb eines dreidimensionalen Untersuchungsbereiches, und mit Mitteln zur Erzeugung eines zweiten Datensatzes (F(x,y,z)) aus dem ersten Datensatz durch eine die Strukturen hervorhebende Filterung,
**gekennzeichnet durch:**

-   Mittel zum Bestimmen von Voxeln (x,y,z), die in einem zweidimensionalen Bild auf dasselbe Pixel (u,v) projiziert werden,
-   Mittel zur Auswahl mindestens eines dieser Voxel in Abhängigkeit von seinem Voxel-Bildwert (F(x,y,z)) in dem zweiten Datensatz,
-   Mittel zur Erzeugung eines zweidimensionalen Bildes ($B_1$(u,v)), wobei der Bildwert für das Pixel (u,v) aus dem Voxel-Bildwert (I(x,y,z)) des ausgewählten Voxels in dem ersten Datensatz abgeleitet wird.

**Claims**

**1.** A medical diagnostic method for the two-dimensional imaging of structures present in an object, which method includes the steps of:

    a) acquiring a first data record (I(x,y,z)) from the object in order to define voxel image values for the voxels within a three-dimensional examination zone,
    b) generating a second data record (F(x,y,z)) from the first data record by a filtering operation which emphasizes the structures,
    **characterized by** the following steps:
    c) determining voxels (x,y,z) that are projected onto the same pixel (u,v) in a two-dimensional image,
    d) selecting at least one of these voxels (x,y,z) in dependence on its voxel image value (F(x,y,z)) in the second data record,
    e) generating the two-dimensional image ($B_1$(u,v)) which image value for the pixel (u,v) is derived from the voxel image value (I(x,y,z)) of the selected voxel in the first data record.

**2.** A method as claimed in Claim 1,
**characterized in that** in step d) the voxel is selected whose voxel image value has an extreme value, notably a maximum, in the second data record.

**3.** A method as claimed in Claim 1,

**characterized in that** the voxel selected in step d) is the first voxel whose voxel image value in the second data record exceeds or falls short of a predefinable threshold value.

4. A method as claimed in Claim 1,
   **characterized in that** a constant image value is assigned to a pixel (u,v) in the two-dimensional image ($B_1$(u, v) if the voxel image values (F(x,y,z)) of the voxels projected onto this pixel do not exceed or fall short of a selectable threshold value in the second data record.

5. A method as claimed in Claim 1,
   **characterized in that** a projection image ($B_2$(u,v)) is derived from the first data record and that this projection image and the two-dimensional image ($B_1$(u,v)) are superposed in an additive manner.

6. A method as claimed in Claim 1,
   **characterized in that** the first data record is acquired by means of an MR method.

7. A method as claimed in Claim 1,
   **characterized in that** the first data record is acquired by means of an X-ray CT method.

8. A method of two-dimensional imaging of structures in an object for medical diagnosis which object is defined by a first data record (I(x, y, z)) with voxel image values for the voxels within a three-dimensional examination zone, which method includes the following steps:

   b) generating a second data record (F(x, y, z)) from the first data record by a filtering operation which emphasizes the structures,
   **characterized by** the following steps:
   c) determining voxels (x,y,z) which are projected onto the same pixel (u,v) in a two-dimensional image,
   d) selecting at least one of these voxels (x,y,z) in dependence on its voxel image value (F(x,y, z)) in the second data record,
   e) generating the two-dimensional image (B(u, v)) where the image value for the pixel (u, v) is derived from the voxel image value (I(x, y, z)) of the selected voxel in the first data record.

9. A medical diagnostic system for the two-dimensional imaging of structures present in an object, including means for the acquisition of a first data record (I(x, y, z)) from the object in order to define voxel image values for the voxels within a three-dimensional examination zone, and means for generating a second data record (F(x, y, z)) from the first data record by a filtering operation which emphasizes the structures,

**characterized by**:

- means for determining voxels (x, y, z) which are projected onto the same pixel (u, v) in a two-dimensional image,
- means for selecting at least one of these voxels in dependence on its voxel image value (F(x, y, z)) in the second data record,
- means for generating a two-dimensional image ($B_1$(u,v)) where the image value for the pixel (u, v) is derived from the voxel image value (I(x,y, z)) of the selected voxel in the first data record.

## Revendications

1. Procédé pour le diagnostic médical en vue de la représentation bidimensionnelle de structures contenues dans un objet, avec les étapes suivantes:

   a) acquisition d'une première série de données (I(x,y,z) de l'objet en vue de la définition de valeurs d'image de voxel pour les voxels situés dans une zone d'examen tridimensionnelle,
   b) production d'une deuxième série de données (F(x,y,z)) partir de la première série de données par un filtrage mettant en évidence les structures,
   **caractérisé par** les étapes suivantes:
   c) détermination de voxels (x,y,z) qui sont projetés dans une image bidimensionnelle sur le même pixel (u,v),
   d) sélection d'au moins un de ces voxels (x,y, z) en fonction de sa valeur d'image de voxel (F (x,y,z)) dans la deuxième série de données,
   e) production de l'image bidimensionnelle ($B_1$ (u,v)), la valeur d'image pour le pixel (u,v) étant déduite de la valeur d'image de voxel (i(x,y,z)) du voxel sélectionné dans la première série de données.

2. Procédé selon la revendication 1,
   **caractérisé par** la sélection du voxel dans l'étape d), dont la valeur d'image de voxel a une valeur extrême, en particulier un maximum, dans la deuxième série de données.

3. Procédé selon la revendication 1,
   **caractérisé par** la sélection du premier voxel dans l'étape d) dont la valeur d'image de voxel dépasse ou n'atteint pas une valeur-seuil à déterminer préalablement dans la deuxième série de données.

4. Procédé selon la revendication 1,
   **caractérisé par** l'attribution d'une valeur d'image constante à un pixel (u,v) dans l'image bidimensionnelle ($B_1$(u,v)) lorsque les valeurs d'image de voxel (F(x,y,z)) des voxels projetés sur ce pixel ne dépassent pas ou n'atteignent pas une valeur-seuil à déterminer préalablement dans la deuxième série de données.

5. Procédé selon la revendication 1, **caractérisé par** la déduction d'une image de projection ($B_2(u,v)$) de la première série de données et par la superposition par addition de cette image de projection et de l'image bidimensionnelle ($B_1(u,v)$).

6. Procédé selon la revendication 1, **caractérisé en ce que** la première série de données est acquise à l'aide d'un procédé RM.

7. Procédé selon la revendication 1, **caractérisé en ce que** la première série de données est acquise à l'aide d'un procédé de tomographie informatisée aux rayons X.

8. Procédé de traitement de l'image pour le diagnostic médical en vue de la représentation bidimensionnelle de structures dans un objet qui est défini par une première série de données ($I(x,y,z)$) avec des valeurs d'image de voxel pour les voxels situés à l'intérieur d'une zone d'examen tridimensionnelle, comportant les étapes suivantes:

> a) production d'une deuxième série de données ($F(x,y,z)$) partir de la première série de données par un filtrage mettant en évidence les structures,
> **caractérisé par** les étapes suivantes:
> b) détermination de voxels ($x,y,z$) qui sont projetés dans une image bidimensionnelle sur le même pixel ($u,v$),
> c) sélection d'au moins un de ces voxels ($x,y,z$) en fonction de sa valeur d'image de voxel ($F(x,y,z)$) dans la deuxième série de données,
> d) production de l'image bidimensionnelle ($B_1(u,v)$), la valeur d'image pour le pixel ($u,v$) étant déduite de la valeur d'image de voxel ($i(x,y,z)$) du voxel sélectionné dans la première série de données.

9. Système de diagnostic médical pour la représentation bidimensionnelle de structures contenues dans un objet, avec des moyens en vue de l'acquisition d'une première série de données ($I(x,y,z)$) de l'objet pour la définition de valeurs d'images de voxel pour les voxels à l'intérieur d'une zone d'examen tridimensionnelle, et avec des moyens en vue de la production d'une deuxième série de données ($F(x,y,z)$) à partir de la première série de données par un filtrage mettant en évidence les structures, **caractérisé par:**

- des moyens de détermination de voxels ($x,y,z$) qui sont projetés dans une image bidimensionnelle sur le même pixel ($u,v$),

- des moyens de sélection d'au moins un de ces voxels ($x,y,z$) en fonction de sa valeur d'image de voxel ($F(x,y,z)$) dans la deuxième série de données,
- des moyens de production de l'image bidimensionnelle ($B_1(u,v)$), la valeur d'image pour le pixel ($u,v$) étant déduite de la valeur d'image de voxel ($i(x,y,z)$) du voxel sélectionné dans la première série de données.

Fig.1

Fig.3A

Fig.3B

Fig.2